(19) Europäisches Patentamt European Patent Office Office européen des brevets

(11) **EP 4 258 415 A1**

(12) **EUROPEAN PATENT APPLICATION**
published in accordance with Art. 153(4) EPC

(43) Date of publication:
**11.10.2023 Bulletin 2023/41**

(21) Application number: **20963827.9**

(22) Date of filing: **03.12.2020**

(51) International Patent Classification (IPC):
**H01M 10/60** (2014.01)  **B60H 1/00** (2006.01)
**B60L 58/24** (2019.01)

(52) Cooperative Patent Classification (CPC):
**B60H 1/00; B60L 58/24; H01M 10/60;** Y02E 60/10

(86) International application number:
**PCT/CN2020/124604**

(87) International publication number:
**WO 2022/115976 (09.06.2022 Gazette 2022/23)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicants:
• **Zhejiang Geely Holding Group Co., Ltd.**
**Hangzhou, Zhejiang 310051 (CN)**
• **Ningbo Geely Automobile Research & Development Co. Ltd.**
**Hangzhou Bay New District**
**Ningbo 315336 (CN)**

(72) Inventors:
• **ZHANG, Yuanyuan**
**Hangzhou Bay New District, Ningbo Zhejiang 315336 (CN)**
• **LU, Shuqiang**
**Hangzhou Bay New District, Ningbo Zhejiang 315336 (CN)**
• **LIU, Dayun**
**Hangzhou Bay New District, Ningbo Zhejiang 315336 (CN)**

(74) Representative: **Dai, Simin**
**Reyda IP**
**157, Quai du Président Roosevelt**
**Appt A073**
**92130 Issy-les-Moulineaux (FR)**

(54) **METHOD AND APPARATUS FOR CONTROLLING HEAT PUMP AIR-CONDITIONING SYSTEM OF TRAVELING VEHICLE, AND DEVICE AND STORAGE MEDIUM**

(57)    Provided are a method and an apparatus for controlling a heat pump air-conditioning system of a vehicle, a device and a storage medium. When a system heat supply amount is incapable of satisfying heating requirements of a passenger cabin and a battery at the same time, whether a priority of heating the passenger cabin is higher than a priority of heating the battery is determined based on comfort requirement information of the passenger cabin, trip information and battery performance information; if yes, a heating mode of the heat pump air-conditioning system is determined based on an outside-vehicle environmental temperature, a thermal load of the passenger cabin, an estimation value of electric drive natural waste heat and a thermal load of a battery system; if not, a heating mode of the heat pump air-conditioning system is determined based on a battery temperature, the thermal load of the passenger cabin, the estimation value of electric drive natural waste heat and the thermal load of the battery system. By controlling arbitration on the heating mode, the requirements of drivable mileage and heating the passenger cabin can be satisfied at the same time, thus enabling the full vehicle comfort and efficiency to reach optimum.

FIG. 1

**Description**

**TECHNICAL FIELD**

The present disclosure relates to the field of vehicle energy management technologies, and in particular, to a method and an apparatus for controlling a heat pump air-conditioning system of a vehicle, a device and a storage medium.

**BACKGROUND**

Along with increasing growth of sales volume of new energy vehicles, users and national policies propose new requirements for drivable mileage of the new energy vehicles. Heat pump air-conditioning systems are mounted in most of the new energy vehicles, especially in electric vehicles to satisfy requirements for supplying heat within the vehicles in winter. But, according to a latest test report of 2019 released by American Automobile Association, three types of electric cars on Chinese market were selected to participate in a test carried out in an environment of minus 7 degrees Celsius, which showed that compared with the air-conditioning systems turned off, the drivable mileage of the vehicles with the air-conditioning systems turned on was decreased by more than 40%. At present, the significant reduction of the drivable mileage in winter is the biggest factor that affects user experiences.

In the prior arts, a solution in which a heat pump air-conditioning system is controlled according to a battery charge state, a travel mileage, an in-vehicle temperature and a battery pack temperature still has some room to make further progress in energy saving and battery drivable mileage improvement.

**SUMMARY**

At present, the major heat pump air-conditioning systems have poor heating effect and greatly affect drivable mileage of batteries after being turned on, thereby affecting user experiences. In order to solve the technical problems in the prior art, a first aspect of the present disclosure provides a method of controlling a heat pump air-conditioning system of a vehicle, including:

obtaining comfort requirement information of a passenger cabin, trip information and battery performance information;
according to heating requirement amounts of the passenger cabin and a battery and a system heat supply amount, determining whether the system heat supply amount satisfies heating requirements of the passenger cabin and the battery at the same time;
when the system heat supply amount is incapable of satisfying the heating requirements of the passenger cabin and the battery at the same time, determining whether a priority of heating the passenger cabin is higher than a priority of heating the battery based on the comfort requirement information of the passenger cabin, the trip information and the battery performance information;
when the priority of heating the passenger cabin is higher than the priority of heating the battery, determining a heating mode of the heat pump air-conditioning system based on an outside-vehicle environmental temperature, a thermal load of the passenger cabin, an estimation value of electric drive natural waste heat and a thermal load of a battery system;
when the priority of heating the passenger cabin is not higher than the priority of heating the battery, determining the heating mode of the heat pump air-conditioning system based on a battery temperature, the thermal load of the passenger cabin, the estimation value of electric drive natural waste heat and the thermal load of the battery system;
based on heat consumption amount information of the passenger cabin, calculating the thermal load of the passenger cabin.

A second aspect of the present disclosure provides an apparatus for controlling a heat pump air-conditioning system of a vehicle, including:

an obtaining module, configured to obtain conform requirement information of a passenger cabin, trip information, and battery performance information;
a requirement determining module, configured to, based on heating requirement amounts of the passenger cabin and a battery and a system heat supply amount, determine whether the system heat supply amount satisfies heating requirements of the passenger cabin and the battery at the same time;
a priority judging module, configured to, when the system heat supply amount is incapable of satisfying the heating requirements of the passenger cabin and the battery at the same time, determine whether a priority of heating the passenger cabin is higher than a priority of heating the battery based on the comfort requirement information of the passenger cabin, the trip information and the battery performance information;

a first mode determining module, configured to, when the priority of heating the passenger cabin is higher than the priority of heating the battery, determine a heating mode of the heat pump air-conditioning system based on an outside-vehicle environmental temperature, a thermal load of the passenger cabin, an estimation value of electric drive natural waste heat and a thermal load of a battery system;

a second mode determining module, configured to, when the priority of heating the passenger cabin is not higher than the priority of heating the battery, determine the heating mode of the heat pump air-conditioning system based on a battery temperature, the thermal load of the passenger cabin, the estimation value of electric drive natural waste heat and the thermal load of the battery system.

A third aspect of the present disclosure provides a device including a processor and a memory, where the memory stores at least one instruction, at least one segment of program, a code set or an instruction set, and the at least one instruction, the at least one segment of program, the code set or the instruction set is loaded and executed by the processor to perform the method of controlling a heat pump air-conditioning system of a vehicle according to the first aspect of the present disclosure.

A fourth aspect of the present disclosure provides a non-transitory computer readable storage medium, storing at least one instruction, at least one segment of program, a code set or an instruction set, where the at least one instruction, the at least one segment of program, the code set or the instruction set is loaded and executed by a processor to perform the method of controlling a heat pump air-conditioning system of a vehicle according to the first aspect of the present disclosure.

In the method and apparatus for controlling a heat pump air-conditioning system of a vehicle, the device and the storage medium according to the embodiments of the present disclosure, when the system heat supply amount cannot satisfy the heating requirements of the passenger cabin and the battery at the same time, intelligent control for arbitration of the heating mode of the heat pump air-conditioning system is performed based on the priority of heating the passenger cabin, the priority of heating the battery, the outside-vehicle environmental temperature, the battery temperature, the thermal load of the passenger cabin, the estimation value of electric drive natural waste heat and the thermal load of the battery system, to coordinate the requirements of both so as to enable the system to work in a more efficient and energy saving manner. Thus, the energy consumption of the battery will be reduced while the drivable mileage of the battery is improved. Further, the heating requirement of the passenger cabin can be satisfied to enable the full vehicle comfort and efficiency to reach the optimum, thereby improving the user experiences.

The additional aspects and advantages of the present disclosure will be partially given in the following descriptions and partially become apparent from the following descriptions or known by practicing the present disclosure.

## BRIEF DESCRIPTION OF THE DRAWINGS

In order to more clearly describe the technical solutions in the embodiments of the present disclosure and the prior arts, the drawings required for description of the embodiments and the prior arts will be briefly introduced. Apparently, the drawings described hereunder are only some embodiments, and those skilled in the art can obtain other drawings based on these drawings without making creative work.

FIG. 1 is a flowchart illustrating a method of controlling a heat pump air-conditioning system of a vehicle according to an embodiment of the present disclosure.
FIG. 2 is a flowchart of step S103.
FIG. 3 is a flowchart of determining a heating mode of a heat pump air-conditioning system according to an embodiment of the present disclosure.

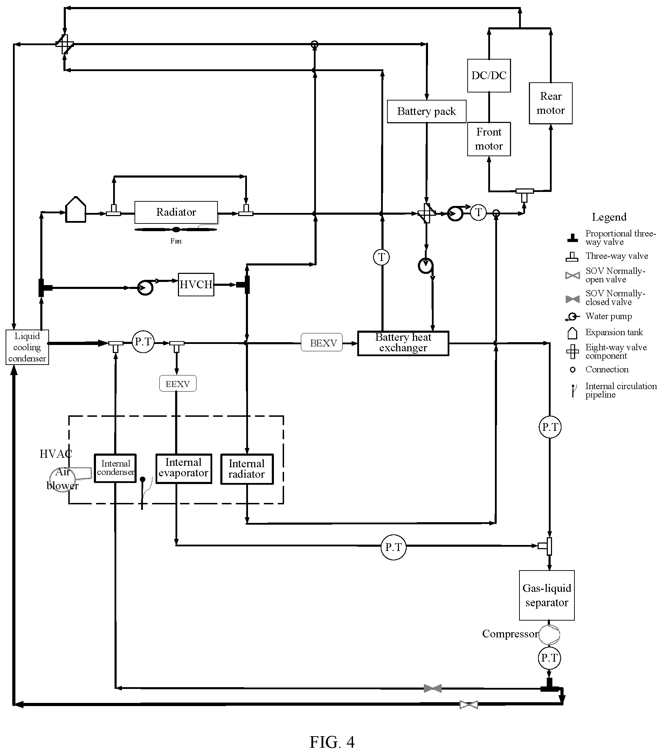

FIG. 4 is an architecture diagram of a heat pump air-conditioning system of a vehicle according to an embodiment of the present disclosure.
FIG. 5 is a flowchart of determining a heating mode of a heat pump air-conditioning system according to an embodiment of the present disclosure.
FIG. 6 is a structural block diagram illustrating an apparatus for controlling a heat pump air-conditioning system of a vehicle according to an embodiment of the present disclosure.
FIG. 7 is a structural block diagram illustrating a priority judging module according to an embodiment of the present disclosure.

## DETAILED DESCRIPTION OF THE EMBODIMENTS

In order to make the objects, technical solutions and advantages of the embodiments of the present disclosure clearer, the technical solutions of the embodiments of the present disclosure will be fully and clearly described below in combination with the accompanying drawings in the embodiments of the present disclosure. Apparently, the embodiments described herein are merely some embodiments of the present disclosure rather than all embodiments. Other embodiments obtained by those of ordinary skill in the art based on the embodiments in the present disclosure without making creative work shall all fall into the scope of protection of the present disclosure. The examples of the embodiments are illustrated in the drawings where same or similar symbols refer to same or similar elements or elements having same or similar functions throughout the specification.

Embodiments

The technical solutions in the prior arts still have the following shortcomings: firstly, determination is based only on the travel mileage, the in-vehicle temperature and the battery pack temperature without considering the waste heat utilization of the electric drive coolant system and insufficiently flexible control is provided on the heat pump system; secondly, control is only performed on the heat pump system in a travel process without considering heat utilization of the heat pump air-conditioning system in a parking process. It is necessary to make further improvements in energy saving and battery drivable mileage.

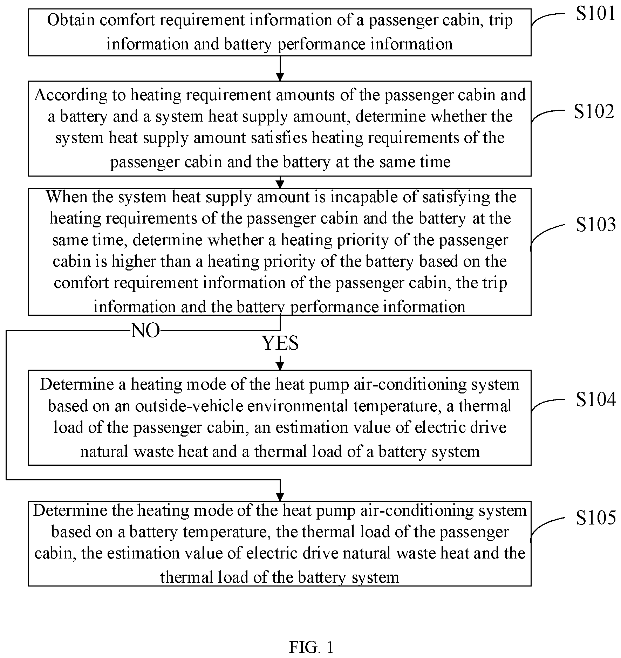

FIG. 1 is a flowchart illustrating a method of controlling a heat pump air-conditioning system of a vehicle according to an embodiment of the present disclosure. The specification provides operation steps of the method as shown in embodiments or flowcharts, but may include more or less operation steps based on normal or non-creative labor. The sequence of the steps in the embodiments is only one of many sequences for executing the operation steps rather than only one execution sequence. When a system or a server product actually performs the steps, it may perform the steps in a sequence shown in the embodiments or drawings or in parallel (for example, in an environment of parallel processor or multi-thread processing). As shown in FIG. 1, the method specifically includes the following steps.

At step S101, comfort requirement information of a passenger cabin, trip information and battery performance information are obtained.

At step S 102, according to heating requirement amounts of the passenger cabin and a battery and a system heat supply amount, it is determined whether the system heat supply amount satisfies heating requirements of the passenger cabin and the battery at the same time.

At step S103, when the system heat supply amount is incapable of satisfying the heating requirements of the passenger cabin and the battery at the same time, it is determined whether a priority of heating the passenger cabin is higher than a priority of heating the battery based on the comfort requirement information of the passenger cabin, the trip information and the battery performance information.

Optionally, the comfort requirement information of the passenger cabin includes a set temperature, a passenger cabin temperature, a glass temperature, a blower speed, a face-blowing and foot-blowing mode, a humidity and a daylight load and the like as well as information obtained in combination based on data transmitted by an intelligent cloud platform. The data transmitted by the intelligent cloud platform may be cold and hot preferences and air volume preference factors and the like of users based on big data deep computing as well as a human machine interface (HMI) target temperature and the like set automatically by the intelligent cloud platform for the users based on user habits.

Specifically, the trip information includes but not limited to route, weather, parking time and a mode of an electric drive unit.

Specifically, the battery performance information includes but not limited to an age of a battery pack, a charging state of a battery and a power requirement.

At step S104, when the priority of heating the passenger cabin is higher than the priority of heating the battery, a heating mode of the heat pump air-conditioning system is determined based on an outside-vehicle environmental temperature, a thermal load of the passenger cabin, an estimation value of electric drive natural waste heat and a thermal load of a battery system.

Preferably, the estimation value of electric drive natural waste heat may be a product of a motor power obtained based on estimation method and a preset scale coefficient. The value of the preset scale coefficient can be obtained after calibration, for example, the value of the preset scale coefficient is 10%.

At step S105, when the priority of heating the passenger cabin is not higher than the priority of heating the battery, the heating mode of the heat pump air-conditioning system is determined based on a battery temperature, the thermal load of the passenger cabin, the estimation value of electric drive natural waste heat and the thermal load of the battery system.

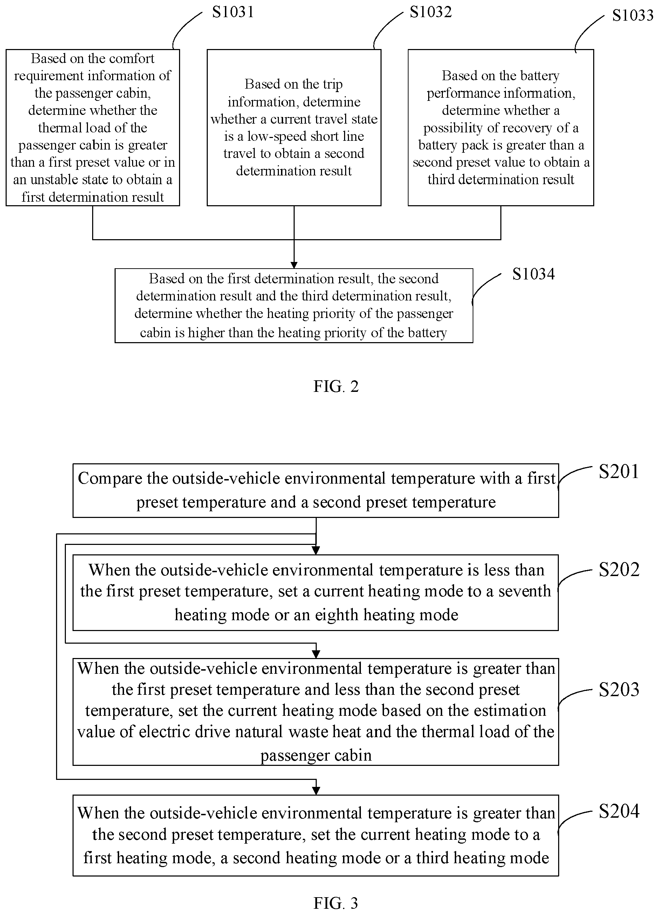

FIG. 2 is a flowchart of step S103. As shown in FIG. 2, specifically, in step S3, determining whether the priority of heating the passenger cabin is higher than the priority of heating the battery based on the comfort requirement information of the passenger cabin, the trip information and the battery performance information includes the following steps.

At step S1031, based on the comfort requirement information of the passenger cabin, whether the thermal load of the passenger cabin is greater than a first preset value or in an unstable state is determined to obtain a first determination result.

In an example, determining whether the thermal load of the passenger cabin is in an unstable state includes:

> obtaining thermal load values of the passenger cabin within a current latest preset time length to form a historical data sample;
> determining whether a thermal load value of the passenger cabin exceeding a preset thermal load value is present in the historical data sample;
> if present, determining the thermal load of the passenger cabin is in an unstable state;
> if not present, determining the thermal load of the passenger cabin is in a stable state.

At step S1032, based on the trip information, whether a current travel state is a low-speed short-line travel is determined to obtain a second determination result.

At step S 1033, based on the battery performance information, whether a possibility of recovery of a battery pack is greater than a second preset value is determined to obtain a third determination result.

In an actual running vehicle, in a case of very high continuous discharge rate, an effective battery capacity will decrease. In intermittent use, the battery will recover during a sleeping period and the temperature will also return to environmental level. The recovery possibility enables the effective capacity of the intermittently-used battery to be increased to some extent, and the discharge efficiency will be higher. The battery generally is intermittently used in a short-line low-speed travel process, and thus has time to recover the battery capacity. Therefore, the recovery possibility of the battery pack in the short-line low-speed travel process is higher than the recovery possibility of the battery pack in a long-line high speed travel process.

At step S1034, based on the first determination result, the second determination result and the third determination result, it is determined whether the priority of heating the passenger cabin is higher than the priority of heating the battery.

Specifically, based on the first determination result, the second determination result and the third determination result, determining whether the priority of heating the passenger cabin is higher than the priority of heating the battery includes:

> when the first determination result, the second determination result and the third determination result are all yes, determining the priority of heating the passenger cabin is higher than the priority of heating the battery;
> when all of the first determination result, the second determination result and the third determination result are not yes, determining the priority of heating the passenger cabin is not higher than the priority of heating the battery.

FIG. 3 is a flowchart of determining a heating mode of a heat pump air-conditioning system according to an embodiment of the present disclosure. As shown in FIG. 3, specifically, in an embodiment, determining a heating mode of the heat pump air-conditioning system based on the outside-vehicle environmental temperature, the thermal load of the passenger cabin, the estimation value of electric drive natural waste heat and the thermal load of the battery system includes the following steps.

At step S201, the outside-vehicle environmental temperature is compared with a first preset temperature and a second preset temperature.

For example, the first preset temperature is -10 °C, and the second preset temperature is 10 °C. It should be noted that the values of the first preset temperature and the second preset temperature as above are only illustrative shall not be considered as limiting of the embodiments of the present disclosure. Based on actual requirements, the first preset temperature and the second preset temperature may also be set to other values.

At step S202, when the outside-vehicle environmental temperature is less than the first preset temperature, a current heating mode is set to a seventh heating mode or an eighth heating mode.

Table 1 shows specific information of various heating modes provided by the embodiments of the present disclosure. Reference may be made to Table 1 for relevant information of the seventh heating mode or the eighth heating mode.

FIG. 1 is an architecture diagram illustrating a multi-circuit heat pump air-conditioning system supporting vehicle low-temperature startup according to an embodiment of the present disclosure. As shown in FIG. 1, specifically, an embodiment of the present disclosure provides a multi-circuit heat pump air-conditioning system supporting vehicle low-temperature startup, including a coolant system, a heat pump system and an electric control system.

The coolant system includes a coolant circuit which includes a DC/DC, a motor, a battery pack, a coolant pipe, a hydraulic valve and at least one water pump, where the hydraulic valve is disposed in the coolant pipe. The at least one water pump is configured to pump a coolant through the coolant circuit along a specific flow direction.

Specifically, the motor includes a front motor and a rear motor, the front motor is series-connected with the DC/DC, and both the front motor and the DC/DC are parallel-connected with the rear motor.

Specifically, the hydraulic valve includes but not limited to a three-way valve, a proportional three-way valve, a four-way valve, an eight-way valve and a normally-opened valve. The eight-way valve may be replaced with two four-way valves. Based on different conduction states of the four-way valve and/or the eight-way valve, series connection and parallel connection states can be formed between a battery system and an electric drive system.

The heat pump system includes a refrigerant circuit including a gas-liquid separator, a compressor, a battery heat exchanger, a liquid-cooled condenser, a coolant heater, a refrigerant pipe, and a hydraulic valve, where the hydraulic valve is disposed in the refrigerant pipe. The gas-liquid separator is generally mounted between an evaporator and the compressor, with the main purpose of: (1) preventing low-temperature steam returning to the compressor from carrying excess liquid drops, preventing the liquid coolant from entering a cylinder of the compressor and preventing liquid-slugging on the compressor; (2) preventing excess coolant from diluting the compressor oil; (3) having the functions of filtration, oil returning and liquid storage and the like. Filtering the refrigerant can guarantee gas entering the compressor is clean; oil returning can guarantee compressor oil is fully lubricated; and liquid storage refers to holding some unused refrigerant in the system to ensure full coolant circulation in the system as well as prevention of liquid-slugging. The coolant heater is used to heat the coolant when an environmental temperature is lower than a preset temperature and the heat pump system is in a non-working state. The compressor is used to work to heat the refrigerant in the refrigerant pipe after the heat pump system is started up. The refrigerant circuit has a high pressure side and a low pressure side. The compressor works to enable the refrigerant circuit to form the high pressure side and the low pressure side, thus pushing the refrigerant to flow.

The electric control system includes a communication unit, a processor and a switching module. The communication unit is configured to receive an outside-vehicle environmental temperature, temperature adjustment requirements of the passenger cabin and the battery pack and a heat storage state of the battery pack. The processor is configured to, based on the outside-vehicle environmental temperature, the temperature adjustment requirements of the passenger cabin and the battery pack and the heat storage state of the battery pack, generate a working mode switching instruction. The switching module is configured to, in response to the working mode switching instruction, switch a connected state of the coolant circuit and/or the refrigerant circuit.

The communication unit is electrically connected with the processor electrically connected with the switching module, and the coolant circuit is thermally connected with the refrigerant circuit. The thermal connection herein refers to heat exchange between the coolant circuit and the refrigerant circuit, which is achieved between the coolant and the refrigerant in the two circuits by using the battery heat exchanger or the liquid-cooled condenser. The heat exchange in the heat exchanger does not refer to simple heat exchange but a complex heat exchange process involving heat convection and heat transfer.

Specifically, outside-vehicle temperature sensors are disposed outside a vehicle body, for example, at the positions such as an engine cover, a luggage compartment cover, and a vehicle window, so as to detect the outside-vehicle environmental temperature and send the outside-vehicle environmental temperature to the communication unit.

Specifically, the battery heat exchanger may also be used as an evaporator.

Specifically, outside-vehicle temperature sensors are disposed outside a vehicle body, for example, at the positions such as an engine cover, a luggage compartment cover, and a vehicle window, so as to detect the outside-vehicle environmental temperature and send the outside-vehicle environmental temperature to the communication unit.

Specifically, a battery electric expansion valve (BEXV) is disposed between the liquid-cooled condenser and the battery heat exchanger, and an openness of the BEXV changes depending on load size. It should be pointed out that the battery heat exchanger may also be used as an evaporator.

Specifically, an Evaporator Electric Expansion Valve (EEXV) is disposed between the internal evaporator and the battery heat exchanger. When the heating/cooling functions are started, the openness of the EEXV can change depending on load size. When the dehumidification, defogging and evaporator defrosting are started, the EEXV can be fully opened.

At step S203, when the outside-vehicle environmental temperature is greater than the first preset temperature and less than the second preset temperature, a current heating mode is set based on the estimation value of electric drive natural waste heat and the thermal load of the passenger cabin.

Table 1 Specific information of the heating modes of embodiments of the present disclosure

| Heating mode number | Applicable working conditions | Heat source | | | | | | Heated object | | Circuit state |
|---|---|---|---|---|---|---|---|---|---|---|
| | | Environment | Battery | Motor | Compressor | Passenger cabin | HV H | Passenger cabin | Battery pack | |
| 01 | When the outside-vehicle environmental temperature is -10 ° C to 10° C, only the passenger cabin is to be heated. | | √ | | | | | √ | | Water source heat pump, battery and motor are in large-circulation series-connection through an eight-way valve, the heat radiator is short circuited, and air mixed in HVAC. |
| 02 | When the outside-vehicle environmental temperature is -10 ° C to 10° C, the passenger cabin and the battery both are to be heated, where the motor preheats the battery. | √ | | √ | | | | √ | √ | Air source (environmental)heat pump, battery and motor are in small-circulation series-connection through the eight-way valve, the heat radiator works, and HVAC external circulation |
| 03 | When the outside-vehicle environmental temperature is -10 ° C to 10° C, the passenger cabin is to be heated. | | √ | √ | | | | √ | | Source heat pump heats the passenger cabin, the battery and the motor are in large-circulation series-connection through an eight-way valve, air mixed in HVAC. |

| Heating mode number | Applicable working conditions | Heat source | | | | | | Heated object | | Circuit state |
|---|---|---|---|---|---|---|---|---|---|---|
| | | Environment | Battery | Motor | Compressor | Passenger cabin | HV H | Passenger cabin | Battery pack | |
| 04 | When the outside-vehicle environmental temperature is <-10° C, the battery has redundant heat storage, and the passenger cabin is to be heated, where the mode supports evaporator defrosting. | | √ | √ | | | √ | √ | | Water source heat pump, battery and motor are in large-circulation series-connection through an eight-way valve, the heat radiator is short circuited, external circulation of HVAC, and PTC (Positive Temperature Coefficient) heating is started in case of not satisfied. |
| 05 | When the outside-vehicle environmental temperature is <-10° C, the | | √ | | √ | | | √ | | Water source heat pump, battery and motor are in large-circulation series-connection |
| Environment | Battery | Motor | Compressor | Passenger cabin | HV H | Passenger cabin | Battery pack | | | |
| | battery has no heat storage or no much heat storage, and the passenger cabin is to be heated, where the mode supports evaporator defrosting. | | | | | | | | | through an eight-way valve, the heat radiator is short circuited, air mixed in the HVAC, the evaporator and the condenser are series-connected in HVAC. |

EP 4 258 415 A1

| Environment | Battery | Motor | Compressor | Passenger cabin | HV H | Passenger cabin | Battery pack | | | |
|---|---|---|---|---|---|---|---|---|---|---|
| 06 | When the outside-vehicle environmental temperature is <-10° C, the battery has heat storage, and the passenger cabin is to be heated with large power. | | √ | √ | √ | | √ | √ | | Battery and motor are in large-circulation series-connection through an eight-way valve, the heat radiator is short circuited, air mixed in the HVAC, the evaporator and the condenser are series-connected in HVAC. |
| 07 | When the outside-vehicle environmental temperature is <-10° C, the battery has no heat storage, and the passenger cabin is to be heated. | | | | √ | | √ | √ | | Battery and motor are in large-circulation series-connection through an eight-way valve, the heat radiator is short circuited, air mixed in the HVAC, the evaporator and the condenser are series-connected in HVAC, the compressor works to heat the passenger cabin, and PTC is turned off upon start of the heat pump system. |

| Environment | Battery | Motor | Compressor | Passenger cabin | HV H | Passenger cabin | Battery pack | | | |
|---|---|---|---|---|---|---|---|---|---|---|
| 08 | When the outside-vehicle environmental temperature is <-10° C, the battery and the passenger cabin are to be heated. | | | | √ | | √ | √ | √ | Battery and motor are in large-circulation series-connection through an eight-way valve, the heat radiator is short circuited, air mixed in the HVAC, the evaporator and the condenser are series-connected in HVAC, the compressor works to heat the passenger cabin, the redundant heat heats the battery, flow distribution is performed for the refrigerant by using a three-way valve downstream of the compressor, and PTC is turned off upon start of the heat pump system. |
| 09 | When the outside-vehicle environmental temperature is <-10° C, the battery is to be heated. | | | | √ | | -v | | √ | Battery and motor are in large-circulation series-connection through an eight-way valve, the heat radiator is short circuited, the refrigerant transfers heat to the battery through coolant condenser, and PTC is turned off upon start of the heat pump svstem. |

(continued)

| Environment | Battery | Motor | Compressor | Passenger cabin | HV H | Passenger cabin | Battery pack | | | |
|---|---|---|---|---|---|---|---|---|---|---|
| 10 | When the outside-vehicle environmental temperature is <-10° C, the battery is to be heated. | | | | √ | | -v | | √ | Battery and motor are in large-circulation series-connection through an eight-way valve, the heat radiator is short circuited, the refrigerant transfers |
| | | | | | | | | | | heat to the battery through coolant condenser, and PTC is not turned off upon start of the heat pump system. |

Specifically, setting the current heating mode based on the estimation value of electric drive natural waste heat and the thermal load of the passenger cabin includes:

comparing the estimation value of electric drive natural waste heat with the thermal load of the passenger cabin;
when the estimation value of electric drive natural waste heat is greater than the thermal load of the passenger cabin, setting the current heating mode to a third heating mode, where the relevant information of the third heating mode is shown in Table 1;
when the estimation value of electric drive natural waste heat is not greater than the thermal load of the passenger cabin, setting the current heating mode to a fourth heating mode, a fifth heating mode or a sixth heating mode, where relevant information of the fourth heating mode, the fifth heating mode and the sixth heating mode is shown in Table 1.

Preferably, after comparing the estimation value of electric drive natural waste heat with the thermal load of the passenger cabin, the method further includes:

when the estimation value of electric drive natural waste heat is not greater than the thermal load of the passenger cabin, comparing a fogging risk value with a preset risk value;
when the fogging risk value is greater than the preset risk value, setting the current heating mode to the fifth heating mode to perform dehumidification and defogging within the passenger cabin, where relevant information of the fifth heating mode is shown in Table 1.

At step S204, when the outside-vehicle environmental temperature is greater than the second preset temperature, the current heating mode is set to a first heating mode, or second heating mode or third heating mode, where relevant information of the first heating mode, or the second heating mode and the third heating mode is shown in Table 1.

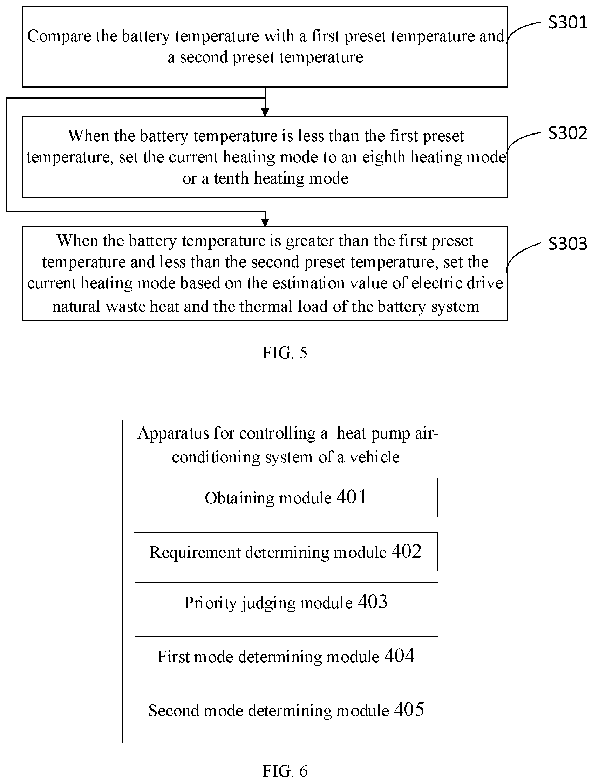

FIG. 5 is a flowchart of determining a heating mode of a heat pump air-conditioning system according to an embodiment of the present disclosure. As shown in FIG. 5, in an embodiment, determining the heating mode of the heat pump air-conditioning system based on the battery temperature, the thermal load of the passenger cabin, the estimation value of electric drive natural waste heat and the thermal load of the battery system includes the following steps.

At step S301, the battery temperature is compared with the first preset temperature and the second preset temperature.

For example, the first preset temperature is -10 °C, and the second preset temperature is 10 °C. It should be noted that the values of the first preset temperature and the second preset temperature as above are only illustrative and shall not be considered as limiting of the embodiments of the present disclosure. Based on actual requirements, the first preset temperature and the second preset temperature may also be set to other values.

At step S302, when the battery temperature is less than the first preset temperature, the current heating mode is set to an eighth heating mode or a tenth heating mode.

At step S303, when the battery temperature is greater than the first preset temperature and less than the second preset temperature, the current heating mode is set based on the estimation value of electric drive natural waste heat and the thermal load of the battery system.

When the battery temperature is greater than the second preset temperature, no heating is required.

Specifically, setting the current heating mode based on the estimation value of electric drive natural waste heat and the thermal load of the battery system includes:

comparing the estimation value of electric drive natural waste heat with the thermal load of the battery system;
when the estimation value of electric drive natural waste heat is greater than the thermal load of the battery system, setting the current heating mode to a second heating mode;
when the estimation value of electric drive natural waste heat is not greater than the thermal load of the battery system, setting the current heating mode to a ninth heating mode.

Specifically, the method of controlling a heat pump air-conditioning system of a vehicle according to embodiments of the present disclosure further includes:

obtaining heat consumption amount information of the passenger cabin; where the heat consumption amount information of the passenger cabin includes a heat consumption amount of vehicle roof, a heat consumption amount of glass window and door, a heat consumption amount of vehicle body skirt, a heat consumption amount of in-cabin floor, a heat consumption amount of cold air infiltration, a heat consumption amount of in-cabin passenger body and a heat consumption amount of vehicle windshield defrosting;
calculating the thermal load Q1 of the passenger cabin based on the heat consumption amount information of the passenger cabin, where the thermal load Q1 of the passenger cabin is calculated in the following formula:

$$Q1 = Q_a + Q_b + Q_c + Q_d + Q_e + Q_p + Q_f$$

$$= \frac{1}{\frac{1}{\propto H} + \sum_{i=1}^{n} \frac{\delta_i}{\lambda_i} + \frac{1}{\alpha B}} F_a \Delta t_a + K_b F_b \Delta t_b + K_c F_c \Delta t_c + K_d F_d \Delta t_d$$

$$+ 0.28 \times G_e \rho c \Delta t_e + 116n + 0.28 \times G_f c \Delta t_f \qquad \text{(Formula 1)}$$

$Q_a$: heat consumption amount of vehicle roof, W;

$Q_b$: heat consumption amount of glass window and door, W;

$Q_c$: heat consumption amount of vehicle body skirt, W;

$Q_d$: heat consumption amount of in-cabin floor, W;

$Q_e$: heat consumption amount of cold air infiltration, W;

$Q_p$: heat consumption amount of in-cabin passenger body, W;

$Q_f$: heat consumption amount of vehicle windshield defrosting, W;

$K_b$, $K_c$, $K_d$ : vehicle roof heat transfer coefficients, in the unit of W/(m²·K);

$F_a$, $F_b$, $F_c$, $F_d$ : vehicle roof heat transfer coefficients, in the unit of m²;

$\propto H$ : outside-vehicle air-to-roof heat emission coefficient, in the unit of W/(m²·K);

$\alpha B$: inside-vehicle air-to-roof heat emission coefficient, in the unit of W/(m²·K);

$$\sum_{i=1}^{n} \frac{\delta_i}{\lambda_i}$$

: sum of heat transfer resistances of each heat insulation layer of the vehicle roof enclosure structure, in the unit of W/(m²·K);

$G_e$ : fresh air volume and leaking air volume, in the unit of $m^3 \cdot h$;

$G_f$ : defrosting air volume, in the unit of $m^3 \cdot h$;

$\rho$: air density, in the unit of kg/m³;

$c$ : specific heat capacity of air, 1.005-1.009 $kJ/(kg \cdot °C)$;

$$\Delta t_{a=}t_{Ba} - t_H = t_B + (5{\sim}10) - t_H$$

(Formula 2)

where,

$\Delta t_a$ : difference of in-cabin air temperature and outside-cabin air temperature, in the unit of°C;

$t_{Ba}$ : in-vehicle roof temperature, in the unit of °C;

$t_H$ : outside-vehicle air temperature, in the unit of °C;

$t_B$ : in-vehicle comfort temperature, generally 16 °C to 18 °C;

It is to be noted that the present disclosure is not limited to the sequence of the actions described herein and some steps may be performed in another sequence or simultaneously based on the present disclosure.

FIG. 6 is a structural block diagram illustrating an apparatus for controlling a heat pump air-conditioning system of a vehicle according to an embodiment of the present disclosure. Specifically, as shown in FIG. 6, the apparatus includes:

an obtaining module 401, configured to obtain conform requirement information of a passenger cabin, trip information, and battery performance information;

a requirement determining module 402, configured to, based on heating requirement amounts of the passenger cabin and a battery and a system heat supply amount, determine whether the system heat supply amount satisfies heating requirements of the passenger cabin and the battery at the same time;

a priority judging module 403, configured to, when the system heat supply amount is incapable of satisfying the heating requirements of the passenger cabin and the battery at the same time, determine whether a priority of heating the passenger cabin is higher than a priority of heating the battery based on the comfort requirement information of the passenger cabin, the trip information and the battery performance information;

a first mode determining module 404, configured to, when the priority of heating the passenger cabin is higher than the priority of heating the battery, determine a heating mode of the heat pump air-conditioning system based on an outside-vehicle environmental temperature, a thermal load of the passenger cabin, an estimation value of electric drive natural waste heat and a thermal load of a battery system;

**a** second mode determining module 405, configured to, when the priority of heating the passenger cabin is not higher than the priority of heating the battery, determine a heating mode of the heat pump air-conditioning system based on a battery temperature, the thermal load of the passenger cabin, the estimation value of electric drive natural waste heat and the thermal load of the battery system.

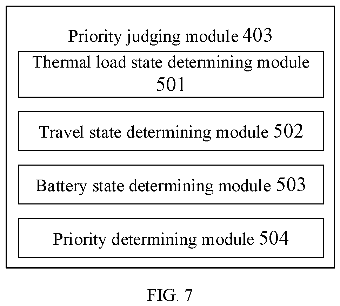

FIG. 7 is a structural block diagram illustrating a priority judging module according to an embodiment of the present disclosure. As shown in FIG. 7, specifically, the priority judging module 403 further includes:

a thermal load state determining module 501, configured to, based on the comfort requirement information of the passenger cabin, determine whether the thermal load of the passenger cabin is greater than a first preset value or in an unstable state to obtain a first determination result;

specifically, the first preset value is a threshold set based on specific item;

a travel state determining module 502, configured to, based on the trip information, determine whether a current travel state is a low-speed short-line travel to obtain a second determination result;

a battery state determining module 503, configured to, based on the battery performance information, determine whether a possibility of recovery of a battery pack is greater than a second preset value to obtain a third determination result;

specifically, the second preset value is a threshold set based on specific item;

a priority determining module 504, configured to, based on the first determination result, the second determination result and the third determination result, determine whether the priority of heating the passenger cabin is higher than the priority of heating the battery.

Furthermore, the priority determining module 504 includes:

a first determining module, configured to, when the first determination result, the second determination result and the third determination result are all yes, determine the priority of heating the passenger cabin is higher than the priority of heating the battery;

a second determining module, configured to, when all of the first determination result, the second determination result and the third determination result are not all yes, determine the priority of heating the passenger cabin is not higher than the priority of heating the battery.

Furthermore, the first mode determining module 402 includes:

an outside-vehicle environmental temperature comparing module, configured to compare the outside-vehicle environmental temperature with a first preset temperature and a second preset temperature;

a first mode setting module, configured to, when the outside-vehicle environmental temperature is less than the first preset temperature, set a current heating mode to a seventh heating mode or an eighth heating mode;

a second mode setting module, configured to, when the outside-vehicle environmental temperature is greater than the first preset temperature and less than the second preset temperature, set the current heating mode based on the estimation value of electric drive natural waste heat and the thermal load of the passenger cabin;

a third mode setting module, configured to, when the outside-vehicle environmental temperature is greater than the second preset temperature, set the current heating mode to a first heating mode, or second heating mode or third heating mode.

Furthermore, the second mode setting module includes:

a second comparing module, configured to compare the estimation value of electric drive natural waste heat with the thermal load of the passenger cabin;

a fourth mode setting module, configured to, when the estimation value of electric drive natural waste heat is greater than the thermal load of the passenger cabin, set the current heating mode to the third heating mode;

a fifth mode setting module, configured to, when the estimation value of electric drive natural waste heat is not greater than the thermal load of the passenger cabin, set the current heating mode to a fourth heating mode, a fifth heating mode or a sixth heating mode.

Furthermore, the second mode setting module further includes:

a fogging risk value comparing module, configured to, when the estimation value of electric drive natural waste heat is not greater than the thermal load of the passenger cabin, compare a fogging risk value with a preset risk value; a sixth mode setting module, configured to, when the fogging risk value is greater than the preset risk value, set the current heating mode to the fifth heating mode to perform dehumidification and defogging within the passenger cabin.

Furthermore, the second mode determining module 403 includes:

a battery temperature comparing module, configured to compare the battery temperature with the first preset temperature and the second preset temperature;
a seventh mode setting module, configured to, when the battery temperature is less than the first preset temperature, set the current heating mode to the eighth heating mode or a tenth heating mode;
an eighth mode setting module, configured to, when the battery temperature is greater than the first preset temperature and less than the second preset temperature, set the current heating mode based on the estimation value of electric drive natural waste heat and the thermal load of the battery system.

Furthermore, the eighth mode setting module includes:

a third comparing module, configured to compare the estimation value of electric drive natural waste heat with the thermal load of the battery system;
a ninth mode setting module, configured to, when the estimation value of electric drive natural waste heat is greater than the thermal load of the battery system, set the current heating mode to the second heating mode;
a tenth mode setting module, configured to, when the estimation value of electric drive natural waste heat is not greater than the thermal load of the battery system, set the current heating mode to a ninth heating mode.

Furthermore, the apparatus for controlling a heat pump air-conditioning system of a vehicle according to the embodiments of the present disclosure further includes:

a heat consumption amount information obtaining module, configured to obtain heat consumption amount information of the passenger cabin; where the heat consumption amount information of the passenger cabin includes a heat consumption amount of vehicle roof, a heat consumption amount of glass window and door, a heat consumption amount of vehicle body skirt, a heat consumption amount of in-cabin floor, a heat consumption amount of cold air infiltration, a heat consumption amount of in-cabin passenger body and a heat consumption amount of vehicle windshield defrosting;
a thermal load calculating module, configured to, based on the heat consumption amount information of the passenger cabin, calculate the thermal load of the passenger cabin.

An embodiment of the present disclosure provides a device, including a processor and a memory, where the memory stores at least one instruction, at least one segment of program, a code set or an instruction set, and the at least one instruction, the at least one segment of program, the code set or the instruction set is loaded and executed by the processor to perform the method of controlling a heat pump air-conditioning system of a vehicle according to the method embodiments.
An embodiment of the present disclosure provides a non-transitory storage medium, which can be disposed in a server to store at least one instruction, at least one segment of program, a code set or an instruction set for performing the method of controlling a heat pump air-conditioning system of a vehicle in the method embodiments, where the at least one instruction, the at least one segment of program, the code set or the instruction set is loaded and executed by a processor to perform the method of controlling a heat pump air-conditioning system of a vehicle according to the above method embodiments.
Optionally, in the present embodiment, the above storage medium may be located in at least one network server of a plurality of network servers in a computer network. Optionally, in the present embodiment, the above storage medium may include but not limited to: a U flash disk, a read only memory (ROM), a random access memory (RAM), a mobile hard drive, a magnetic diskette or a compact disk and other mediums storing program codes.
As can be seen from the embodiments of the method and apparatus for controlling a heat pump air-conditioning system of a vehicle, the device and the storage medium in the present disclosure, in the embodiments of the present disclosure, based on whether the heating requirement of the passenger cabin is large or unstable, whether the travel is a short-line low-speed travel, and the possibility of capacity recovery of the battery pack, the heating priorities of the passenger cabin and the battery are determined. When the system heat supply amount cannot satisfy the heating requirements of the passenger cabin and the battery at the same time, intelligent control on arbitration of the working mode at the time of operation of the heat pump system is carried out to coordinate the requirements of both so as to enable the system to work in a more efficient and energy-saving manner. Thus, the energy consumption of the battery will be reduced while the drivable mileage of the battery is improved. Further, the heating requirement of the passenger cabin can be satisfied to enable the full vehicle comfort and efficiency to reach the optimum, thereby improving the user experiences.

It is to be noted that, the sequence of the above embodiments of the present disclosure is only illustrative and do not represent preference for the embodiments. Further, the above descriptions are made to the specific embodiments of the present disclosure. Other embodiments are still within the scope of protection of the appended claims. In some cases, the actions or steps recorded in the claims may be performed in a sequence different from recorded in the embodiments to obtain a desired result. Further, the processes depicted in the drawings do not necessarily require the shown sequence or continuous sequence to achieve a desired result. In some embodiments, multi-task processing and parallel processing may be possible or advantageous.

The embodiments in the specification are described in a progressive manner with same or similar parts between the embodiments referred to each other. Each embodiment focuses on description of differences from other embodiments. Particularly, the apparatus and server embodiments are basically similar to the method embodiments and thus will be briefly described, and reference may be made to the descriptions of the method embodiments for related parts.

Those skilled in the art can understand that all or part of the steps of the above embodiments may be achieved by hardware, or by instructing relevant hardware by using programs. The programs may be stored in a computer readable storage medium, which may be read only memory, magnetic disk or compact disk or the like.

The above descriptions are made only to preferred embodiments of the present disclosure and such preferred embodiments do not constitute any limitation to the present disclosure. Any changes, equivalent substitutions and improvements etc. made within the spirit and principle of the present disclosure shall fall within the scope of protection of the present disclosure.

**Claims**

1. A method of controlling a heat pump air-conditioning system of a vehicle, comprising:

   obtaining comfort requirement information of a passenger cabin, trip information and battery performance information;
   according to heating requirement amounts of the passenger cabin and a battery and a system heat supply amount, determining whether the system heat supply amount satisfies heating requirements of the passenger cabin and the battery at the same time;
   when the system heat supply amount is incapable of satisfying the heating requirements of the passenger cabin and the battery at the same time, determining whether a priority of heating the passenger cabin is higher than a priority of heating the battery based on the comfort requirement information of the passenger cabin, the trip information and the battery performance information;
   when the priority of heating the passenger cabin is higher than the priority of heating the battery, determining a heating mode of the heat pump air-conditioning system based on an outside-vehicle environmental temperature, a thermal load of the passenger cabin, an estimation value of electric drive natural waste heat and a thermal load of a battery system; and
   when the priority of heating the passenger cabin is not higher than the priority of heating the battery, determining the heating mode of the heat pump air-conditioning system based on a battery temperature, the thermal load of the passenger cabin, the estimation value of electric drive natural waste heat and the thermal load of the battery system.

2. The method of claim 1, wherein determining whether the priority of heating the passenger cabin is higher than the priority of heating the battery based on the comfort requirement information of the passenger cabin, the trip information and the battery performance information comprises:

   based on the comfort requirement information of the passenger cabin, determining whether the thermal load of the passenger cabin is greater than a first preset value or in an unstable state to obtain a first determination result;
   based on the trip information, determining whether a current travel state is a low-speed short line travel to obtain a second determination result;
   based on the battery performance information, determining whether a possibility of recovery of a battery pack is greater than a second preset value to obtain a third determination result;
   based on the first determination result, the second determination result and the third determination result, determining whether the priority of heating the passenger cabin is higher than the priority of heating the battery.

3. The method of claim 2, wherein based on the first determination result, the second determination result and the third determination result, determining whether the priority of heating the passenger cabin is higher than the priority of heating the battery comprises:

when the first determination result, the second determination result and the third determination result are all yes, determining that the priority of heating the passenger cabin is higher than the priority of heating the battery; when all of the first determination result, the second determination result and the third determination result are not all yes, determining that the priority of heating the passenger cabin is not higher than the priority of heating the battery.

4. The method of claim 1, wherein determining the heating mode of the heat pump air-conditioning system based on the outside-vehicle environmental temperature, the thermal load of the passenger cabin, the estimation value of electric drive natural waste heat and the thermal load of the battery system comprises:

comparing the outside-vehicle environmental temperature with a first preset temperature and a second preset temperature; when the outside-vehicle environmental temperature is less than the first preset temperature, setting a current heating mode to a seventh heating mode or an eighth heating mode; when the outside-vehicle environmental temperature is greater than the first preset temperature and less than the second preset temperature, setting the current heating mode based on the estimation value of electric drive natural waste heat and the thermal load of the passenger cabin; when the outside-vehicle environmental temperature is greater than the second preset temperature, setting the current heating mode to a first heating mode, a second heating mode or a third heating mode.

5. The method of claim 4, wherein setting the current heating mode based on the estimation value of electric drive natural waste heat and the thermal load of the passenger cabin comprises:

comparing the estimation value of electric drive natural waste heat with the thermal load of the passenger cabin; when the estimation value of electric drive natural waste heat is greater than the thermal load of the passenger cabin, setting the current heating mode to the third heating mode; when the estimation value of electric drive natural waste heat is not greater than the thermal load of the passenger cabin, setting the current heating mode to a fourth heating mode, a fifth heating mode or a sixth heating mode.

6. The method of claim 4, wherein after comparing the estimation value of electric drive natural waste heat with the thermal load of the passenger cabin, the method further comprises:

when the estimation value of electric drive natural waste heat is not greater than the thermal load of the passenger cabin, comparing a fogging risk value with a preset risk value; when the fogging risk value is greater than the preset risk value, setting the current heating mode to the fifth heating mode to perform dehumidification and defogging within the passenger cabin.

7. The method of claim 1, wherein determining the heating mode of the heat pump air-conditioning system based on the battery temperature, the thermal load of the passenger cabin, the estimation value of electric drive natural waste heat and the thermal load of the battery system comprises:

comparing the battery temperature with a first preset temperature and a second preset temperature; when the battery temperature is less than the first preset temperature, setting the current heating mode to an eighth heating mode or a tenth heating mode; when the battery temperature is greater than the first preset temperature and less than the second preset temperature, setting the current heating mode based on the estimation value of electric drive natural waste heat and the thermal load of the battery system; when the battery temperature is greater than the second preset temperature, performing no heating.

8. The method of claim 7, wherein setting the current heating mode based on the estimation value of electric drive natural waste heat and the thermal load of the battery system comprises:

comparing the estimation value of electric drive natural waste heat with the thermal load of the battery system; when the estimation value of electric drive natural waste heat is greater than the thermal load of the battery system, setting the current heating mode to a second heating mode;
when the estimation value of electric drive natural waste heat is not greater than the thermal load of the battery system, setting the current heating mode to a ninth heating mode.

9. The method of claim 1, further comprising:

obtaining heat consumption amount information of the passenger cabin; wherein the heat consumption amount information of the passenger cabin comprises a heat consumption amount of vehicle roof, a heat consumption amount of glass window and door, a heat consumption amount of vehicle body skirt, a heat consumption amount of in-cabin floor, a heat consumption amount of cold air infiltration, a heat consumption amount of in-cabin passenger body and a heat consumption amount of vehicle windshield defrosting;
based on the heat consumption amount information of the passenger cabin, calculating the thermal load of the passenger cabin.

10. An apparatus for controlling a heat pump air-conditioning system of a vehicle, comprising:

an obtaining module, configured to obtain conform requirement information of a passenger cabin, trip information, and battery performance information;
a requirement determining module, configured to, based on heating requirement amounts of the passenger cabin and a battery and a system heat supply amount, determine whether the system heat supply amount satisfies heating requirements of the passenger cabin and the battery at the same time;
a priority judging module, configured to, when the system heat supply amount is incapable of satisfying the heating requirements of the passenger cabin and the battery at the same time, determine whether a priority of heating the passenger cabin is higher than a priority of heating the battery based on the comfort requirement information of the passenger cabin, the trip information and the battery performance information;
a first mode determining module, configured to, when the priority of heating the passenger cabin is higher than the priority of heating the battery, determine a heating mode of the heat pump air-conditioning system based on an outside-vehicle environmental temperature, a thermal load of the passenger cabin, an estimation value of electric drive natural waste heat and a thermal load of a battery system;
a second mode determining module, configured to, when the priority of heating the passenger cabin is not higher than the priority of heating the battery, determine the heating mode of the heat pump air-conditioning system based on a battery temperature, the thermal load of the passenger cabin, the estimation value of electric drive natural waste heat and the thermal load of the battery system.

11. A device, comprising a processor and a memory, wherein the memory stores at least one instruction, at least one segment of program, a code set or an instruction set, and the at least one instruction, the at least one segment of program, the code set or the instruction set is loaded and executed by the processor to perform the method according to any one of claims 1 to 9.

12. A non-transitory computer readable storage medium, storing at least one instruction, at least one segment of program, a code set or an instruction set, wherein the at least one instruction, the at least one segment of program, the code set or the instruction set is loaded and executed by a processor to perform the method according to any one of claims 1 to 9.

| | |
|---|---|
| Obtain comfort requirement information of a passenger cabin, trip information and battery performance information | S101 |

↓

| | |
|---|---|
| According to heating requirement amounts of the passenger cabin and a battery and a system heat supply amount, determine whether the system heat supply amount satisfies heating requirements of the passenger cabin and the battery at the same time | S102 |

↓

| | |
|---|---|
| When the system heat supply amount is incapable of satisfying the heating requirements of the passenger cabin and the battery at the same time, determine whether a heating priority of the passenger cabin is higher than a heating priority of the battery based on the comfort requirement information of the passenger cabin, the trip information and the battery performance information | S103 |

—NO—　　　　YES
↓

| | |
|---|---|
| Determine a heating mode of the heat pump air-conditioning system based on an outside-vehicle environmental temperature, a thermal load of the passenger cabin, an estimation value of electric drive natural waste heat and a thermal load of a battery system | S104 |

↓

| | |
|---|---|
| Determine the heating mode of the heat pump air-conditioning system based on a battery temperature, the thermal load of the passenger cabin, the estimation value of electric drive natural waste heat and the thermal load of the battery system | S105 |

FIG. 1

S1031

S1032

S1033

| Based on the comfort requirement information of the passenger cabin, determine whether the thermal load of the passenger cabin is greater than a first preset value or in an unstable state to obtain a first determination result | Based on the trip information, determine whether a current travel state is a low-speed short line travel to obtain a second determination result | Based on the battery performance information, determine whether a possibility of recovery of a battery pack is greater than a second preset value to obtain a third determination result |

S1034

Based on the first determination result, the second determination result and the third determination result, determine whether the heating priority of the passenger cabin is higher than the heating priority of the battery

FIG. 2

Compare the outside-vehicle environmental temperature with a first preset temperature and a second preset temperature — S201

When the outside-vehicle environmental temperature is less than the first preset temperature, set a current heating mode to a seventh heating mode or an eighth heating mode — S202

When the outside-vehicle environmental temperature is greater than the first preset temperature and less than the second preset temperature, set the current heating mode based on the estimation value of electric drive natural waste heat and the thermal load of the passenger cabin — S203

When the outside-vehicle environmental temperature is greater than the second preset temperature, set the current heating mode to a first heating mode, a second heating mode or a third heating mode — S204

FIG. 3

**Legend**

- Proportional three-way valve
- Three-way valve
- SOV Normally-open valve
- SOV Normally-closed valve
- Water pump
- Expansion tank
- Eight-way valve component
- Connection
- Internal circulation pipeline

FIG. 4

Compare the battery temperature with a first preset temperature and a second preset temperature — S301

When the battery temperature is less than the first preset temperature, set the current heating mode to an eighth heating mode or a tenth heating mode — S302

When the battery temperature is greater than the first preset temperature and less than the second preset temperature, set the current heating mode based on the estimation value of electric drive natural waste heat and the thermal load of the battery system — S303

FIG. 5

Apparatus for controlling a heat pump air-conditioning system of a vehicle

Obtaining module 401

Requirement determining module 402

Priority judging module 403

First mode determining module 404

Second mode determining module 405

FIG. 6

Priority judging module 403

Thermal load state determining module 501

Travel state determining module 502

Battery state determining module 503

Priority determining module 504

FIG. 7

## INTERNATIONAL SEARCH REPORT

| | |
|---|---|
| | International application No. |
| | **PCT/CN2020/124604** |

**A.    CLASSIFICATION OF SUBJECT MATTER**

H01M 10/60(2014.01)i;   B60H 1/00(2006.01)i;   B60L 58/24(2019.01)i

According to International Patent Classification (IPC) or to both national classification and IPC

**B.    FIELDS SEARCHED**

Minimum documentation searched (classification system followed by classification symbols)

H01M; B60H; B60L

Documentation searched other than minimum documentation to the extent that such documents are included in the fields searched

Electronic data base consulted during the international search (name of data base and, where practicable, search terms used)

CNPAT; WPI; EPODOC; CNKI: 电池, 乘员舱, 航员, 空调, 热泵, 优先, 判断, 仲裁, batter+, cell?, passenger compartment, crew cabin, air condition+, heat+, thermal, bump, cool+, refrigerat+, prior+, judg+, determin+

**C.    DOCUMENTS CONSIDERED TO BE RELEVANT**

| Category* | Citation of document, with indication, where appropriate, of the relevant passages | Relevant to claim No. |
|---|---|---|
| X | CN 111497550 A (GUANGZHOU AUTOMOBILE GROUP CO., LTD.) 07 August 2020 (2020-08-07)<br>  description, paragraphs 66-100, figure 3 | 1-12 |
| A | CN 110588277 A (CHINA FAW GROUP CORPORATION) 20 December 2019 (2019-12-20)<br>  entire document | 1-12 |
| A | CN 111688544 A (AIWAYS MOTOR CO., LTD.) 22 September 2020 (2020-09-22)<br>  entire document | 1-12 |
| A | CN 111251826 A (DONGFENG MOTOR CORPORATION) 09 June 2020 (2020-06-09)<br>  entire document | 1-12 |
| A | CN 111370812 A (GEELY AUTOMOBILE RESEARCH INSTITUTE (NINGBO) CO., LTD. et al.) 03 July 2020 (2020-07-03)<br>  entire document | 1-12 |
| A | JP 2019182135 A (DENSO CORP.) 24 October 2019 (2019-10-24)<br>  entire document | 1-12 |

☐ Further documents are listed in the continuation of Box C.          ☑ See patent family annex.

| | |
|---|---|
| *      Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| **09 July 2021** | **30 July 2021** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2020/124604**

| Patent document cited in search report | | | Publication date (day/month/year) | Patent family member(s) | | | Publication date (day/month/year) |
|---|---|---|---|---|---|---|---|
| CN | 111497550 | A | 07 August 2020 | None | | | |
| CN | 110588277 | A | 20 December 2019 | CN | 110588277 | B | 30 March 2021 |
| CN | 111688544 | A | 22 September 2020 | None | | | |
| CN | 111251826 | A | 09 June 2020 | None | | | |
| CN | 111370812 | A | 03 July 2020 | None | | | |
| JP | 2019182135 | A | 24 October 2019 | None | | | |

Form PCT/ISA/210 (patent family annex) (January 2015)